# EUROPÄISCHE PATENTSCHRIFT

(11) **EP 1 113 248 B1**
(45) Veröffentlichungstag und Bekanntmachung des Hinweises auf die Patenterteilung: **27.07.2011**
(21) Anmeldenummer: 00124173.6
(22) Anmeldetag: 08.11.2000
(51) Int. Cl.: G01F 1/84

(54) **Coriolis-Massendurchflussmessgerät mit einem geraden Messrohr aus Keramik**
Coriolis mass flowmeter having a straight ceramic measuring tube
Débitmètre massique à effet Coriolis avec un tube droit en céramique

(30) Priorität: 27.12.1999 DE 19962858; 28.01.2000 DE 10003784
(43) Veröffentlichungstag der Anmeldung: 04.07.2001
(73) Patentinhaber: Krohne AG, 4019 Basel (CH)
(72) Erfinder: Davies, Lawrence, Great Oakley, NN18 8JJ (GB); Hussain, Yousif, Dr., Northampton, NN3 3DA (GB); Rolph, Chris, Hartwell, Northampton, NN7 2HA (GB)
(74) Vertreter: Gesthuysen, von Rohr & Eggert

(56) Entgegenhaltungen:
- DE-C- 4 119 396
- US-A- 4 677 859
- US-A- 5 157 975
- US-A- 5 373 745
- US-A- 5 531 126

## Beschreibung

Die Erfindung betrifft ein Massendurchflussmessgerät das nach dem Coriolis-Prinzip arbeitet, mit einem ein strömendes Medium führenden, geraden Coriolis-Meßrohr, mit mindestens einem dem Coriolis-Meßrohr zugeordneten, das Coriolis-Meßrohr anregenden Schwingungserzeuger, mit mindestens einem dem Coriolis-Meßrohr zugeordneten, Coriolis-Kräfte und/oder auf Coriolis-Kräften beruhende Schwingungen erfassenden Meßwertaufnehmer, wobei ein Flansche aufweisendes Außengehäuse vorhanden ist und das Massendurchflußmeßgerät mit Hilfe der Flansche in ein Rohrsystem einbaubar ist, so daß das Coriolis-Meßrohr bezüglich von dem Rohrsystem ausgehender und in Längsrichtung des Coriolis-Meßrohrs wirkender Kräfte von dem Rohrsystem entkoppelt ist. Ein solches Massendurchflussmessgerät ist aus der US 5,373,745 A bekannt.

Zuvor ist gesagt worden, dass zu dem in Rede stehenden Massendurchflußmeßgerät u.a. mindestens ein dem Coriolis-Meßrohr "zugeordneter" Schwingungserzeuger und mindestens ein dem Coriolis-Meßrohr "zugeordneter" Meßwertaufnehmer gehören. In der Regel sind der Schwingungserzeuger oder die Schwingungserzeuger, jedenfalls ein Teil des Schwingungserzeugers bzw. ein Teil der Schwingungserzeuger, und der Meßwertaufnehmer bzw. die Meßwertaufnehmer, jedenfalls ein Teil des Meßwertaufnehmers bzw. ein Teil der Meßwertaufnehmer, mit dem Coriolis-Meßrohr verbunden. Da dies jedoch nicht zwingend erforderlich ist, ist der Ausdruck "zugeordnet" anstatt des Ausdrucks "verbunden" verwendet worden.

Bei Massendurchflußmeßgeräten, die nach dem Coriolis-Prinzip arbeiten, unterscheidet man grundsätzlich zwischen einerseits solchen, deren Coriolis-Meßrohr zumindest im wesentlichen gerade ausgeführt ist, und andererseits solchen, deren Coriolis-Meßrohr schleifenförmig ausgeführt ist. Außerdem unterscheidet man bei den in Rede stehenden Massendurchflußmeßgeräten zwischen einerseits solchen, die nur ein Coriolis-Meßrohr aufweisen, und andererseits solchen, die zwei Coriolis-Meßrohre aufweisen; bei den Ausführungsformen mit zwei Coriolis-Meßrohren können diese strömungstechnisch in Reihe oder parallel zueinander liegen.

In jüngerer Zeit setzen sich zunehmend Massendurchflußmeßgeräte mit nur einem im wesentlichen geraden Coriolis-Meßrohr durch. Nach dem Coriolis-Prinzip arbeitende Massendurchflußmeßgeräte, die genau ein gerades Coriolis-Meßrohr aufweisen, haben gegenüber solchen Massendurchflußmeßgeräten, die entweder zwei gerade Coriolis-Meßrohre oder ein schleifenförmiges Coriolis-Meßrohr aufweisen, erhebliche Vorteile. Gegenüber Massendurchflußmeßgeräten mit zwei geraden Coriolis-Meßrohren ist der Vorteil vor allem darin zu sehen, dass Strömungsteiler bzw. Strömungszusammenführer, die bei Massendurchflußmeßgeräten mit zwei Coriolis-Meßrohren erforderlich sind, nicht benötigt werden. Gegenüber Massendurchflußmeßgeräten mit einem schleifenförmigen Coriolis-Meßrohr bzw. mit zwei schleifenförmigen Coriolis-Meßrohren ist der Vorteil vor allem darin zu sehen, dass ein gerades Coriolis-Meßrohr einfacher als ein schleifenförmiges Coriolis-Meßrohr hergestellt werden kann, dass der Druckabfall bei einem geraden Coriolis-Meßrohr geringer ist als bei einem schleifenförmigen Coriolis-Meßrohr und dass ein gerades Coriolis-Meßrohr besser gereinigt werden kann als ein schleifenförmiges Coriolis-Meßrohr.

Massendurchflußmeßgeräte mit nur einem geraden Coriolis-Meßrohr weisen trotz aller Vorteile auch Nachteile auf. Beispielsweise können aufgrund von thermisch verursachten Längsausdehnungen in gerade ausgeführten Coriolis-Meßrohren in diesen Spannungen auftreten, die im Extremfall zu mechanischen Schäden, nämlich zu Spannungsrissen und -brüchen, an dem Coriolis-Meßrohr führen können. Bei gerade ausgeführten Coriolis-Meßrohren werden nämlich durch Wärmeausdehnungen auftretende Spannungen nicht durch eine Veränderung des Radius der Rohrbiegung aufgenommen, wie dies z.B. bei schleifenförmigen Coriolis-Meßrohren der Fall ist.

Ein anderes Problem, das allerdings allen Massendurchflußmeßgeräten, die nach dem Coriolis-Prinzip arbeiten, zu eigen ist, unabhängig davon, ob es sich dabei um Massendurchflußmeßgeräte mit genau einem Coriolis-Meßrohr oder mit mehreren Coriolis-Meßrohren handelt, und unabhängig davon, ob es sich um gerade ausgeführte Coriolis-Meßrohre oder um schleifenförmige Coriolis-Meßrohre handelt, liegt darin, dass je nach dem für das Coriolis-Meßrohr bzw. die Coriolis-Meßrohre verwendeten Material, bestimmte, dieses Material angreifende chemische Substanzen mit dem jeweiligen Coriolis-Massendurchflußmeßgerät keiner Massendurchflußmessung unterworfen werden können.

Dies schränkt den Einsatzbereich der einzelnen Coriolis-Massendurchflußmeßgerät unter Umständen stark ein und kann die Verwendung eines anderen Coriolis-Massendurchflußmeßgeräts, also den Austausch des eingebauten Coriolis-Massendurchflußmeßgeräts, erforderlich machen.

Im Übrigen ist es für sich bei Massendurchflussmessgeräten, die nach dem Coriolis-Prinzip arbeiten, bekannt, ein Coriolis-Meßrohr aus Keramik zu verwenden (vergleiche die US 4,677,859 und die US 5,157,975 A).

Aufgabe der Erfindung ist es, ein Massendurchflussmessgerät, das nach dem Coriolis-Prinzip arbeitet, mit genau einem geraden Corilis-Meßrohr bereitzustellen, dessen Coriolis-Meßrohr nur geringe thermische Ausdehnungen und damit verbundene Spannungen zeigt und gleichzeitig eine hohe chemische Resistenz gegen chemisch aggressive Substanzen aufweist.

Das erfindungsgemäße Massendurchflussmessgerät, bei dem die zuvor aufgezeigte Aufgabe gelöst ist, ist dadurch gekennzeichnet, dass das Coriolis-Meßrohr aus Keramik besteht, dass zwischen den endseitigen Stirnflächen des Coriolis-Meßrohrs und jeweils einem diesen Stirnflächen zugeordneten Flansch des Rohrsystems eine Dichtung vorhanden ist und dass die Dichtung das Coriolis-Meßrohr einerseits gegen das Außengehäuse und andererseits gegen das Rohrsystem abdichtet und als Puffer für in Längsrichtung des Coriolis-Meßrohrs auftretende Kräfte wirkt.

Keramik als Material für das Coriolis-Meßrohr hat einerseits den Vorteil, dass es in einem sehr großen Temperaturbereich einsetzbar und auch bei hohen Temperaturen verwendbar ist, wobei es in dem verwendbaren großen Temperaturbereich nur mäßige Temperaturausdehnungen zeigt. Andererseits wird Keramik von chemisch aggressiven Substanzen, wie z. B. chlorierten Gasen oder Flüssigkeiten, nicht oder nur kaum angegriffen, so dass sich für das erfindungsgemäße Coriolis-Massendurchflußmeßgerät ein breites Einsatzspektrum eröffnet.

Grundsätzlich ist praktisch jede Keramik für das Coriolis-Meßrohr des erfindungsgemäßen Massendurchflußmeßgeräts, das nach dem Coriolis-Prinzip arbeitet, einsetzbar. Besonders bevorzugt sind jedoch chemisch besonders resistente Keramiken mit geringen thermischen Ausdehnungskoeffizienten. Vorzugsweise besteht das Coriolis-Meßrohr aus Zirkoniumoxid oder Aluminiumoxid, und gebesteht das Coriolis-Meßrohr aus Zirkoniumoxid oder Aluminiumoxid, und gemäß einer besonders bevorzugten Weiterbildung der Erfindung, die den Einsatz des Coriolis-Massendurchflußmeßgeräts für praktisch alle chemischen Verbindungen bis auf Fluorwasserstoff (= HF = Flußsäure) ermöglicht, aus mit Zirkonium stabilisiertem Aluminiumoxid, das mehr als 5% Zirkonium enthält. Alternativ dazu finden für das Coriolis-Meßrohr des erfindungsgemäßen Massendurchflußmeßgeräts vorzugsweise Nitrid-Keramiken Anwendung.

Das erfindungsgemäße Massendurchflussmessgerät weist ein Flansche aufweisendes Außengehäuse auf und ist mit Hilfe der Flansche in ein Rohrsystem einbaubar, und zwar derart, dass das Coriolis-Meßrohr bezüglich von dem Rohrsystem ausgehender und in Längsrichtung des Coriolis-Meßrohrs wirkender Kräfte von dem Rohrsystem entkoppelt ist. Eine solche Entkopplung kann vorzugsweise dadurch erreicht werden, dass das Coriolis-Meßrohr an seinen beiden Enden mit dem Außengehäuse fest verbunden ist, jedoch so bemessen und angeordnet ist, dass das Coriolis-Meßrohr gegenüber den seitlichen Begrenzungsflächen des Coriolis-Massendurch-flußmeßgeräts leicht zurückgezogen ist, also im in das Rohrsystem eingebauten Zustand keinen direkten Kontakt zu diesem hat. Alternativ dazu kann das Coriolis-Meßrohr wenigstens an einem seiner Enden nicht mit dem Außengehäuse fest verbunden sein, so dass das Coriolis-Meßrohr in seiner Längsrichtung zu dem Außengehäuse verschiebbar ist. Auf diese Weise wird ebenfalls erreicht, dass das Coriolis-Meßrohr bezüglich auftretender Längskräfte von dem Rohrsystem entkoppelt ist.

Um das Coriolis-Meßrohr trotz seiner Längsverschieblichkeit an der richtigen Stelle zu halten, sind zwischen den Stirnflächen des Coriolis-Meßrohrs einerseits und dem Flansch des Rohrsystems, in das das Coriolis-Massendurchflußmeßgerät einbaubar ist, andererseits elastische Halterungen, vorzugsweise in Form von Dichtungen aus O-Ringen, vorhanden, die somit zur elastischen Fixierung des relativ zum Außengehäuse verschiebbaren Endes des Coriolis-Meßrohrs dienen. Bezüglich der Problematik in Längsrichtung des Coriolis-Meßrohrs auftretender und auf das Coriolis-Meßrohr einwirkender Längskräfte sei angemerkt, dass Bauteile aus Keramiken zwar eine gewisse Resistenz gegen in Längsrichtung auftretende Druckkräfte aufweisen. Zugkräfte in Längsrichtung führen jedoch viel schneller zu Problemen, d. h. zu Beschädigungen, eines solchen Ke ramikbauteils. Dementsprechend sollen die oben beschriebenen Maßnahmen im wesentlichen dazu dienen, solche in Längsrichtung des Coriolis-Meßrohrs auftretende Zugkräfte von dem Coriolis-Meßrohr zu entkoppeln.

Das erfindungsgemäße Coriolis-Massendurchflußmeßgerät ist vorzugsweise dadurch weitergebildet, dass das Coriolis-Meßrohr in wenigstens einem Endbereich einen mit dem Coriolis-Meßrohr fest verbundenen Ring aufweist, der vorzugsweise aus Metall oder Kunststoff hergestellt ist und über den das Coriolis-Meßrohr mit dem Außengehäuse verbunden ist. Ein solcher Ring kann mehrere Funktionen übernehmen: Einerseits wird durch einen solchen Ring die Anbringung des Außengehäuses an dem keramischen Coriolis-Meßrohr erleichtert und andererseits kann der Ring als Führung und Halterung für eine Dichtung vorgesehen sein. Darüber hinaus kann der in einem Endbereich mit dem Coriolis-Meßrohr fest verbundene Ring dazu dienen, solche Spannungen des keramischen Coriolis-Meßrohrs zu vermeiden, die von thermischen Ausdehnungen des keramischen Coriolis-Meßrohrs herrühren. Ist das Coriolis-Meßrohr nämlich auf direkte Weise fest mit dem Außengehäuse des Coriolis-Massendurchflußmeßgeräts verbunden, werden aufgrund der großen Festigkeit und Steifigkeit des Außengehäuses kaum Längenveränderungen des keramischen Coriolis-Meßrohrs zugelassen, ohne dass zumindest gewisse Spannungen in dem Coriolis-Meßrohr auftreten. Ein in einem Endbereich mit dem Coriolis-Meßrohr fest verbundener Ring weist jedoch eine gewisse Elastizität auf, die wenigstens in geringem Maße thermisch begründete Längsbewegungen des Coriolis-Meßrohrs zulässt, so dass in dem Coriolis-Meßrohr keine thermisch bedingten Spannungen auftreten oder diese zumindest stark verringert werden. Selbstverständlich werden durch den in einem Endbereich mit dem Coriolis-Meßrohr fest verbundene Ring lediglich solche Längsverschiebungen des Coriolis-Meßrohrs zugelassen, die die Symmetrie und somit die Meßgenauigkeit des Coriolis-Massendurchflußmeßgeräts nicht beeinträchtigen.

Der Ring kann in dem Endbereich auf dem keramischen Coriolis-Meßrohr mit Hilfe unterschiedlicher Verfahren angebracht sein. Vorzugsweise ist jedoch vorgesehen, dass der Ring auf das keramische Coriolis-Meßrohr aufgecrimpt oder aufgeschrumpft ist. Ein metallischer Ring kann auch auf einer metallisierten Fläche auf dem keramischen Coriolis-Meßrohr aufgeschweißt sein.

Um das erfindungsgemäße keramische Coriolis-Meßrohr gas- bzw. flüssigkeitsdicht zu machen, ist erfindungsgemäß des weiteren vorgesehen, dass zwischen den endseitigen Stirnflächen des Coriolis-Meßrohres einerseits und den der jeweiligen Stirnfläche zugeordneten Flanschen des Rohrsystems, in das das Coriolis-Massendurchflußmeßgerät eingebaut wird, andererseits jeweils eine Dichtung vorgesehen ist. Diese Dichtung dichtet das Coriolis-Meßrohr einerseits gegen das Außengehäuse und andererseits gegen das Rohrsystem ab und wirkt darüber hinaus als Puffer für in Längsrichtung des Coriolis-Meßrohrs auftretende Kräfte, Die Dichtung übernimmt also die Funktion, dass thermisch bedingte Längsausdehnungen des keramischen Coriolis-Meßrohrs bzw. thermisch bedingte Längsausdehnungen des Rohrsystems, die zu Druckkräften auf des keramische Coriolis-Meßrohr führen könnten, aufgenommen und somit abgefedert werden können, so dass durch diese thermischen Ausdehnungen praktisch keine Spannungen in dem Coriolis-Meßrohr entstehen.

Als Material für die zuvor beschriebene Dichtung eignet sich besonders Gummi oder Kunststoff. vorzugsweise Viton® oder Kalrez®.

Für eine einfache, verlässliche und beschädigungsfreie Befestigung des Außengehäuses auf dem keramischen Coriolis-Meßrohr in dessen Endbereichen ist gemäß einer bevorzugten Weiterbildung der Erfindung vorgesehen, dass die Wandstärke des Coriolis-Meßrohrs in wenigstens einem Endbereich größer als in seinem mittleren Bereich ist. Um optimale Schwingungseigenschaften des keramischen Coriolis-Meßrohrs zu gewährleisten, ist dabei vorzugsweise vorgesehen, dass das Coriolis-Meßrohr in seinem mittleren Bereich eine Wandstärke von weniger als 1 mm aufweist, vorzugsweise von etwa 0,7 mm.

Gemäß einer bevorzugten Weiterbildung der Erfindung ist ferner vorgesehen, dass das Massendurchflußmeßgerät einen an den Endbereichen des Coriolis-Meßrohrs befestigten Innenzylinder aufweist. Auch hier ist es vorteilhaft, wenn die Befestigung des Innenzylinders in einem solchen Bereich des keramischen Coriolis-Meßrohrs erfolgt, in dem dieses eine Wandstärke aufweist, die größer ist als die für die Schwingung optimale Wandstärke in seinem mittleren Bereich.

Schließlich besteht eine bevorzugte Weiterbildung des erfindungsgemäßen Massendurchflußmeßgeräts darin, dass das Coriolis-Meßrohr derart in das Rohrsystem einbaubar ist, dass das Coriolis-Meßrohr bezüglich von dem Rohrsystem ausgehender und auf das Coriolis-Meßrohr wirkender Biegekräfte von dem Rohrsystem entkoppelt ist. Dies kann z. B. dadurch erreicht werden, dass in den Endbereichen des Coriolis-Meßrohrs jeweils ein im Wesentlichen senkrecht zur Längsachse des Coriolis-Meßrohrs elastisch verformbarer Pufferring zwischen dem Coriolis-Meßrohr und dem Außengehäuse vorgesehen ist. Auf diese Weise wird bei von dem Rohrsystem ausgehenden und auf das Massendurchflußmeßgerät übertragenen Längsbiegungen, also im wesentlichen senkrecht zur Achse des Coriolis-Meßrohrs wirkenden Kräften, zwar der Pufferring verformt, auf das Coriolis-Meßrohr werden diese Kräfte jedoch kaum übertragen, so dass das Coriolis-Meßrohr durch diese Kräfte praktisch auch nicht verformt wird.

Im Einzelnen gibt es nun eine Vielzahl von Möglichkeiten, das erfindungsgemäße Massendurchflußmeßgerät auszugestalten und weiterzubilden. Dazu wird einerseits auf die dem Patentanspruch 1 nachgeordneten Patentansprüche, andererseits auf die Beschreibung bevorzugter Ausführungsbeispiele der Erfindung in Verbindung mit der Zeichnung verwiesen. In der Zeichnung zeigt
- Fig. 1: im Schnitt schematisch einen Teil eines in ein Rohrsystem einge- bauten Coriolis-Massendurchflußmeßgeräts gemäß einem ersten bevorzugten Ausführungsbeispiel der Erfindung und
- Fig. 2: im Schnitt schematisch ein Coriolis-Massendurchflußmeßgerät ge- mäß einem zweiten bevorzugten Ausnihrungsbeispiel der Erfin- dung.

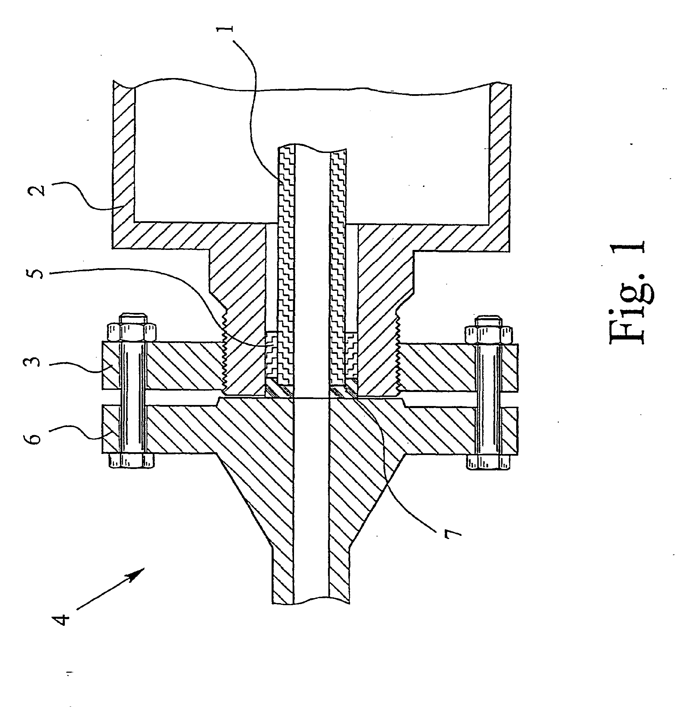

Aus Fig. 1 ist im Schnitt schematisch die Einbausituation eines Coriolis-Massendurchflußmeßgeräts gemäß einem ersten bevorzugten Ausführungsbeispiel der Erfindung ersichtlich, nämlich der Übergang des Coriolis-Massendurchflußmeßgeräts auf das Rohrsystem, in das es eingebaut ist. Das Coriolis-Meßrohr 1 gemäß dem ersten bevorzugten Ausführungsbeispiel der Erfindung besteht aus mit Zirkonium stabilisiertem Aluminiumoxid, das mehr als 5 % Zirkonium enthält. Dieses Material ermöglicht den Einsatz des Coriolis-Massendurchflußmeßgeräts mit praktisch beliebigen chemischen Verbindungen, ausgenommen Fluorkohlenstoff, also Flußsäure. Umschlossen wird das keramische Coriolis-Meßrohr 1 von einem metallischen Außengehäuse 2, das somit gleichzeitig die radiale äußere Begrenzung des Coriolis-Massendurchflußmeßgeräts darstellt. Während das Außengehäuse 2 in seinem mittleren Bereich einen Durchmesser aufweist, der deutlich größer als der Durchmesser des Coriolis-Meßrohrs 1 ist, endet das Außengehäuse 2 an seinen beiden Enden, von denen in Fig. 1 nur das linke Ende dargestellt ist, in einem im Durchmesser geringeren Endabschnitt, um die Befestigung des Außengehäuses 2 am Coriolis-Meßrohr 1 zu erleichtern und um einen Flansch 3 in Längsrichtung unverschieblich auf dem Außengehäuse 2 fixieren zu können. Der Flansch 3 dient zur Anbringung des Coriolis-Massendurchflußmeßgeräts an dem Rohrsystem 4, in das das Coriolis-Massendurchflußmeßgerät eingebaut ist.

Zwischen dem einen geringeren Durchmesser aufweisenden Endabschnitt des Außengehäuses 2 und dem Coriolis-Meßrohr 1 ist ein metallischer Ring 5 vorgesehen, der gemäß dem aus Fig. 1 ersichtlichen ersten bevorzugten Ausführungsbeispiel der Erfindung auf das Coriolis-Meßrohr 1 aufgecrimpt ist. Eine feste Fixierung des Rings 5 an dem Außengehäuse 2 wird durch Verschweißen erreicht.

Zur Befestigung des Coriolis-Massendurchflußmeßgeräts an dem Rohrsystem 4 weist das Rohrsystem 4 einen Flansch 6 auf, der an dem Flansch 3 des Coriolis-Massendurchflußmeßgeräts befestigt wird. Wie aus Fig. 1 ersichtlich, ist das Coriolis-Meßrohr 1 längenmäßig so bemessen und innerhalb des Außengehäuses 2 derart angeordnet, dass das Coriolis-Meßrohr 1 nicht über die von dem Außengehäuse 2 gebildeten seitlichen End- bzw. Grenzflächen hinaus übersteht, sondern im Gegenteil dazu gegenüber diesen Flächen leicht zurückgezogen ist. Auf diese Weise kann gemäß dem ersten bevorzugten Ausführungsbeispiel der Erfindung eine aus Kunststoff bestehende Dichtung 7 zwischen dem Coriolis-Meßrohr 1 und dem auf dieses aufgecrimpten Ring 5 einerseits und dem Flansch 6 des Rohrsystems 4 andererseits vorgesehen sein. Die Dichtung 7 übernimmt im wesentlichen folgende Funktionen: Sie dichtet das Coriolis-Meßrohr 1 einerseits gegen das Außengehäuse 2 und andererseits gegen das Rohrsystem 4 ab und wirkt darüber hinaus als Puffer für in Längsrichtung des Coriolis-Meßrohrs 1 auftretende Kräfte, die z. B. vom Rohrsystem 4 in das Coriolis-Massendurchflußmeßgerät und damit auf das Coriolis-Meßrohr 1 übertragen werden könnten.

Würden solche in Längsrichtung des Coriolis-Meßrohrs 1 auftretenden Kräfte wirksam über die Stirnflächen des Coriolis-Meßrohrs 1 auf dieses übertragen, so könnte dies leicht zu extrem hohen Spannungen und damit zu Brüchen des Coriolis-Meßrohrs 1 führen. Durch die aus Fig. 1 ersichtliche und oben beschriebene Konstruktion wird dem jedoch vorgebeugt. Da ferner zwischen dem Flansch 3 des Coriolis-Massendurchflußmeßgeräts einerseits und dem Flansch 6 des Rohrsystems 4 andererseits unter normalen Einbaubedingungen kein Kontakt besteht, über den Druckkräfte übertragen werden können, d. h. der Flansch 3 des Coriolis-Massendurchftußmeßgeräts den Flansch 6 des Rohrsystems 4 nicht direkt berührt, werden von dem Rohrsystem 4 ausgehende Druckkräfte effektiv von der Dichtung 7 aufgenommen und damit abgefedert. Von dem Rohrsystem 4 ausgehende Zugkräfte, die z. B. beim Zusammenschrauben des Flansches 3 des Coriolis-Massendurchflußmeßgeräts mit dem Flansch 6 des Rohrsystems 4 auftreten, werden lediglich über die Befestigung des Außengehäuses 2 mit dem Coriolis-Meßrohr 1, vorliegend also über den auf das Coriolis-Meßrohr 1 aufgecrimpten Ring 5, übertragen. Da diese Kräfte zwar in Längsrichtung, dabei jedoch von der Seite her auf das Coriolis-Meßrohr 1 angreifen, vermögen sie nicht die gleichen unerwünschten und oft zu einem Bruch des Coriolis-Meßrohrs 1 führenden Spannungen aufzubauen, wie bei einer direkten Übertragung in Längsrichtung wirkender Kräfte auf die Stirnflächen des Coriolis-Meßrohrs 1. Darüber hinaus stellt der Ring 5, da er aus Metall hergestellt ist und damit eine gewisse Elastizität aufweist, wenigstens in gewissem Maße eine elastische Verbindung zwischen dem Außengehäuse 2 und dem Coriolis-Meßrohr 1 dar, die der Erzeugung solcher Spannungen in dem Coriolis-Meßrohr 1 entgegenwirkt, die von dessen thermischer Längsausdehnung herrühren könnten.

Der Flansch 3 ist, wie aus Fig. 1 ersichtlich, mit dem Außengehäuse 2 mittels eines Gewindes verbunden. Eine zusätzliche Fixierung und sichere Verhinderung einer Längsverschieblichkeit zwischen dem Außengehäuse 2 und dem Flansch 3 des Coriolis-Massendurchflußmeßgeräts kann dadurch erreicht werden, dass zwischen dem Außengehäuse 2 und dem Flansch 3 eine Schweißnaht ausgeführt wird.

Gemäß dem ersten bevorzugten Ausführungsbeispiel der Erfindung wird eine besonders gute Fixierung der Dichtung 7 dadurch erreicht, dass diese radial an ihrer Außenseite einen ringförmigen Vorsprung aufweist, mit dem sie zwischen das Coriolis-Meßrohr 1 und das Außengehäuse 2 bis zu dem auf das Coriolis-Meßrohr 1 aufgecrimpten Ring 5 hineinragt.

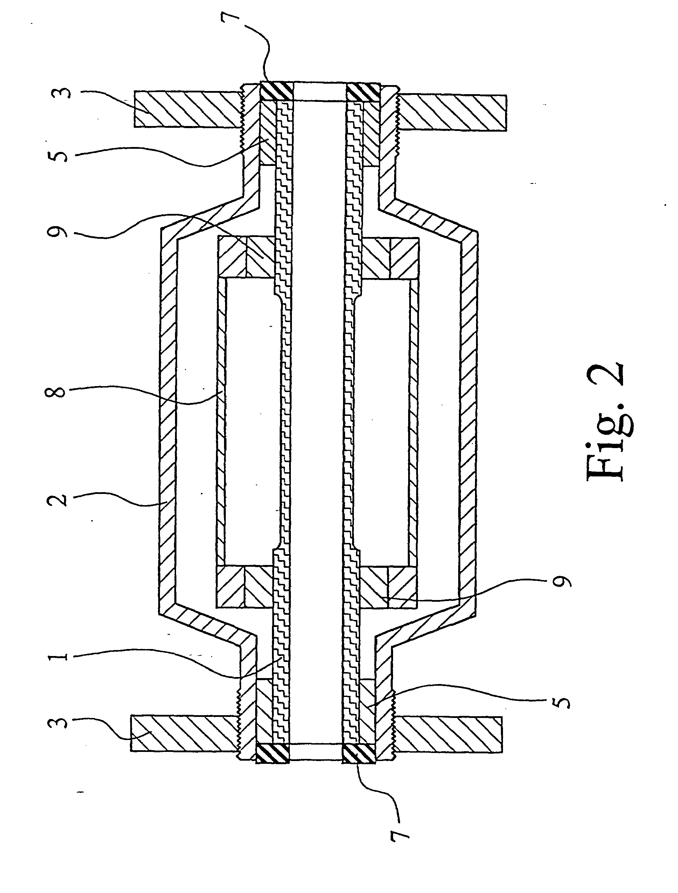

Aus Fig. 2 ist im Schnitt schematisch ein Coriolis-Massendurchflußmeßgerät gemäß einem zweiten bevorzugten Ausführungsbeispiel der Erfindung ersichtlich. Gemäß dem zweiten bevorzugten Ausführungsbeispiel der Erfindung ist vorgesehen, dass das keramische Coriolis-Meßrohr 1 in seinen beiden Endbereichen eine größere Wandstärke als in seinem mittleren Bereich aufweist. Auf diese Weise wird erreicht, dass einerseits in den Endbereichen, in denen das Coriolis-Meßrohr 1 mit dem Außengehäuse 2 verbunden ist, eine ausreichend große Wandstärke und damit verbunden eine besonders hohe Stabilität des Coriolis-Meßrohrs 1 vorliegt und andererseits der mittlere Bereich, der einer Anregungsschwingung unterworfen wird und darüber hinaus die Coriolis-Schwingungen des Mediums erfährt, gute schwingungsmäßige Eigenschaften aufweist. Neben der Befestigung des Außengehäuses 2 über den auf dem Coriolis-Meßrohr 1 auf gecrimpten Ring 5 in dem eine große Wandstärke aufweisenden Endbereich ist vorgesehen, dass in diesem Endbereich ferner ein Innenzylinder 8 über Keilringe 9 befestigt wird. Für die Befestigung des Innenzylinders 8 über Keilringe 9 gilt bezüglich der Stabilität und Festigkeit des Coriolis-Meßrohr 1 ebenfalls das zuvor ausgeführte.

Innerhalb des Innenzylinders 8 sind typischerweise ein das Coriolis-Meßrohr 1 anregender Schwingungserzeuger sowie mindestens ein Coriolis-Kräfte und/oder auf Coriolis-Kräften beruhende Schwingungen erfassender Meßwertaufnehmer vorgesehen, die in Fig. 2 der Übersichtlichkeit halber jedoch nicht dargestellt sind.

Wie schon bei dem oben beschriebenen ersten bevorzugten Ausfülarungsbeispiel der Erfindung ist auch bei dem Coriolis-Massendurchflußmeßgerät gemäß dem aus Fig. 2 ersichtlichen zweiten bevorzugten Ausfibrungsbeispiel der Erfindung vorgesehen, dass das keramische Coriolis-Meßrohr 1 derart bemessen und angeordnet ist, dass es auf beiden Seiten des Coriolis-Massendurchflußmeßgeräts vor der jeweiligen durch das Außengehäuse 2 vorgegebenen Endfläche des Coriolis-Massendurchflußmeßgeräts endet. Auf diese Weise kann eine Dichtung 7 vorgesehen sein, die, wie ebenfalls oben schon ausgeführt, dazu dient, ansonsten in Längsrichtung auf die Stirnfläche des Coriolis-Meßrohrs 1 einwirkende Kräfte aufzunehmen und abzupuffern. Die Dichtung 7 gemäß dem zweiten bevorzugten Ausführungsbeispiel der Erfindung ist kreisringförmig, besteht aus Kalrez® und wird einfach in dem Endbereich des Coriolis-Massendurchflußmeßgeräts zwischen dem Coriolis-Meßrohr 1 einerseits und dem in Fig. 2 nicht dargestellten Flansch des Rohrsystems, in das das Coriolis-Massendurchflußmeßgerät eingebaut wird, andererseits eingesetzt.

Weiter oben ist bereits ausgeführt worden, dass bei dem erfindungsgemäßen Massendurchflußmeßgerät das Coriolis-Meßrohr vorzugsweise aus mit Zirkonium stabilisiertem Aluminiumoxid, das mehr als 5 % Zirkonium enthält, besteht. Hinsichtlich der Eigenschaften der für das Coriolis-Meßrohr verwendeten Keramik ist folgendes - alternativ oder kumulativ - zu beachten:
a) Der Wärmeausdehnungskoeffizient sollte zwischen dem von Stahl und dem vom Titan liegen.
b) Die Dichte sollte etwas höher als die von Titan, aber geringer als die von Stahl sein.
c) Die Biegefestigkeit sollte etwas geringer als die von Titan, aber größer als die von Stahl sein.
d) Der Elastizitätsmodul sollte etwa der von Stahl sein.
e) Die Druckfestigkeit sollte sehr hoch im Verhältnis zu der von Titan und Stahl sein.

Im Einzelnen empfiehlt es sich, für das Coriolis-Meßrohr eine Keramik zu verwenden, die - alternativ oder kumulativ - folgende Eigenschaften hat:
a) Dichte: 5,7 g/cm³
b) Härte (Knoop, 100 g): 17.000 N/mm²
c) Druckfestigkeit: 3.000 N/mm²
d) Biegefestigkeit: 450 N/mm²
e) Elastizitätsmodul: 360.000 N/mm²
f) Wärmeausdehnungskoeffizient: 10⁻⁵/K.

## Patentansprüche

1. Massendurchflußmeßgerät, das nach dem Coriolis-Prinzip arbeitet, mit einem ein strömendes Medium führenden, geraden Coriolis-Meßrohr (1), mit mindestens einem dem Coriolis-Meßrohr (1) zugeordneten, das Coriolis-Meßrohr (1) anregenden Schwingungserzeuger, mit mindestens einem dem Coriolis-Meßrohr zugeordneten, Coriolis-Kräfte und/oder auf Coriolis-Kräften beruhende Schwingungen erfassenden Meßwertaufnehmer, wobei ein Flansche (3) aufweisendes Außengehäuse (2) vorhanden ist und das Massendurchflußmeßgerät mit Hilfe der Flansche (3) in ein Rohrsystem (4) einbaubar ist, so daß das Coriolis-Meßrohr (1) bezüglich von dem Rohrsystem (4) ausgehender und in Längsrichtung des Coriolis-Meßrohrs (1) wirkender Kräfte von dem Rohrsystem (4) entkoppelt ist, **dadurch gekennzeichnet, daß** das Coriolis-Meßrohr (1) aus Keramik besteht, daß zwischen den endseitigen Stirnflächen des Coriolis-Meßrohrs (1) und jeweils einem diesen Stirnflächen zugeordneten Flansch (6) des Rohrsystems (4) eine Dichtung (7) vorhanden ist und daß die Dichtung (7) das Coriolis-Meßrohr (1) einerseits gegen das Außengehäuse (2) und andererseits gegen das Rohrsystem (4) abdichtet und als Puffer für in Längsrichtung des Coriolis-Meßrohrs (1) auftretende Kräfte wirkt.

2. Massendurchflußmeßgerät nach Anspruch 1, **dadurch gekennzeichnet, daß** das Coriolis-Meßrohr (1) aus Keramik besteht, insbesondere das Coriolis-Meßrohr (1) aus Zirkoniumoxid, einer Nitrid-Keramik oder Aluminiumoxid - insbesondere mit Zirkonium stabilisiertem Aluminiumoxid, das mehr als 5% Zirkonium enthält, - besteht.

3. Massendurchflußmeßgerät nach Anspruch 1 oder 2, **dadurch gekennzeichnet, daß** das Coriolis-Meßrobr (1) an wenigstens einem seiner beiden Enden mit dem Auβengehäuse (2) fest verbunden ist.

4. Massendurchflußmeßgerät nach Anspruch 3, **dadurch gekennzeichnet, daß** das Coriolis-Meßrohr (1) in wenigstens einem Endbereich einen mit dem Coriolis-Meßrohr (1) fest verbundenen Ring (5) ausweist und über den Ring (5) mit dem Außengehäuse (2) verbunden ist.

5. Massendurchflußmeßgerät nach Anspruch 4, **dadurch gekennzeichnet, daß** der Ring (5) aufgecrimpt oder aufgeschrumpft ist.

6. Massendurchflußmeßgerät nach einem der Ansprüche 1 bis 5, **dadurch gekennzeichnet, daß** das Coriolis-Meßrohr (1) an einem seiner beiden Enden in Längsrichtung des Coriolis-Meßrohrs (1) relativ zu dem Außengehäuse (2) verschiebbar gelagert ist.

7. Massendurchflußmeßgerät nach einem der Ansprüche 1 bis 5, **dadurch gekennzeichnet, daß** das Coriolis-Meßrohr (1) an seinen beiden Enden in Längsrichtung des Coriolis-Meßrohrs (1) relativ zu dem Außengehäuse (2) verschiebbar gelagert ist.

8. Massendurchflußmeßgerät nach einem der Ansprüche 1 bis 7, **dadurch gekennzeichnet, daß** die Dichtung (7) aus Gummi oder Kunststoff besteht, vorzugsweise aus Viton^{®} oder Kalrez^{®}.

9. Massendurchflußmeßgerät nach einem der Ansprüche I bis 8, **dadurch gekennzeichnet, daß** die Dichtung (7) radial an ihrer Außenseite einen ringförmigen Vorsprung aufweist und mit diesem Vorsprung zwischen das Coriolis-Meßrohr (1) und das Außengehäuse (2) bis zu dem auf dem Coriolis-Meßrohr (1) vorgesehenen Ring (5) hineinragt.

10. Massendurchflußmeßgerät nach einem der Ansprüche 1 bis 9, **dadurch gekennzeichnet, daß** die Dichtung (7) zur elastischen Fixierung eines relativ zum Auβengehäuse (2) verschiebbaren Endes des Coriolis-Meßrohrs (1) dient.

11. Massendurchflußmeßgerät nach einem der Ansprüche 1 bis 10, **dadurch gekennzeichnet, daß** die Wandstärke des Coriolis-Meßrohrs (1) in wenigstens einem Endbereich größer ist als in seinem mittleren Bereich.

12. Massendurchflußmeßgerät nach Anspruch 11, **dadurch gekennzeichnet, daß** das Coriolis-Meßrohr (1) in seinem mittleren Bereich eine Wandstärke von weniger als 1 mm aufweist, vorzugsweise von etwa 0,7 mm.

13. Massendurchflußmeßgerät nach einem der Ansprüche 1 bis 12, **dadurch gekennzeichnet, daß** ein an den Endbereichen des Coriolis-Meßrohrs (1) befestigter Innenzylinder (8) vorhanden ist.

14. Massendurchflußmeßgerät nach Anspruch 13, **dadurch gekennzeichnet, daß** in dem Innenzylinder (8) der dem Coriolis-Meßrohr (1) zugeordnete, das Coriolis-Meßrohr (1) anregende Schwingungserzeuger oder/und der dem Coriolis-Meßrohr (1) zugeordnete, Coriolis-Kräfte und/oder auf Coriolis-Kräften beruhende Schwingungen erfassende Meßwertaufnehmer vorhanden ist bzw. sind.

15. Massendurchflußmeßgerät nach einem der Ansprüche 1 bis 14, **dadurch gekennzeichnet, daß** das Coriolis-Meßrohr (1) derart in das Rohrsystem (4) einbaubar ist, daß das Coriolis-Meßrohr (1) bezüglich von dem Rohrsystem (4) ausgehender und auf das Coriolis-Meßrohr (1) wirkender Biegekräfte von dem Rohrsystem (4) entkoppelt ist.

16. Massendurchflußmeßgerät nach Anspruch 15, **dadurch gekennzeichnet, daß** in den Endbereichen des Coriolis-Meßrohrs (1) jeweils ein im wesentlichen senkrecht zur Längsachse des Coriolis-Meßrohrs (1) elastisch verformbarer Pufferring zwischen dem Coriolis-Meßrohr (1) und dem Außengehäuse (2) vorhanden ist.

## Claims

1. A mass flowmeter operating by the Coriolis principle and incorporating a straight Coriolis measuring tube (1) through which flows a fluid or medium, at least one oscillator associated with and exciting the Coriolis measuring tube (1), at least one detector associated with the Coriolis measuring tube (1) for capturing the Coriolis force values and/or the Coriolis-force-induced oscillations, wherein an outer enclosure (2) is provided with flanges (3) and the mass flowmeter can be installed in a pipe system (4) with the aid of said flanges (3) in such fashion that the Coriolis measuring tube (1) is decoupled from forces emanating from the pipe system (4) and impinging on the Coriolis measuring tube (1) in a longitudinal direction,
**characterized in**
**that** the Coriolis measuring tube (1) consists of a ceramic material, a seal (7) is provided between the end faces of the Coriolis measuring tube (1) and a corresponding flange (6) of the pipe system (4), the seal (7) separates the Coriolis measuring tube (1) from both the outer enclosure (2) and the pipe system (4) and acts as a buffer for forces occurring in the longitudinal direction of the Coriolis measuring tube (1).

2. Mass flowmeter according to claim 1, **characterized in that** the Coriolis measuring tube (1) consists of a ceramic material, in particular the Coriolis measuring tube (1) consists of zirconium oxide, a nitride ceramic or aluminum oxide especially zirconium-stabilized aluminum oxide containing in excess of 5% zirconium.

3. Mass flowmeter according to claim 1 or 2, **characterized in that** at least at one of its two ends, the Coriolis measuring tube (1) is firmly connected to the outer enclosure (2).

4. Mass flowmeter according to claim 3, **characterized in that** at least on one end section, the Coriolis measuring tube (1) is provided with a ring element (5) firmly attached to the Coriolis measuring tube (1) and is connected to the outer enclosure (2) by way of said ring element (5).

5. Mass flowmeter according to claim 4, **characterized in that** the ring element (5) is crimp- or shrink-mounted.

6. Mass flowmeter according to any one of claims 1 to 5, **characterized in that** at one of its two ends, the Coriolis measuring tube (1) is movable in its longitudinal direction relative to the outer enclosure (2).

7. Mass flowmeter according to any one of claims 1 to 5, **characterized in that** at both of its two ends, the Coriolis measuring tube (1) is movable in its longitudinal direction relative to the outer enclosure (2).

8. Mass flowmeter according to any one of claims 1 to 7, **characterized in that** the seal (7) consists of rubber or of a plastic material, preferably Viton ® or Kalrez ®.

9. Mass flowmeter according to any one of claims 1 to 8, **characterized in that** the seal (7) is provided with an annular, peripheral ledge which protrudes between the Coriolis measuring tube (1) and the outer enclosure (2) up to the ring element (5) mounted on the Coriolis measuring tube (1).

10. Mass flowmeter according to any one of claims 1 to 9, **characterized in that** the seal (7) serves as an elastic mount for one end of the Coriolis measuring tube (1) which permits movement relative to the outer enclosure (2).

11. Mass flowmeter according to any one of claims 1 to 10, **characterized in that** the Coriolis measuring tube (1) has a greater wall thickness in at least one of its end sections than in its mid-section.

12. Mass flowmeter according to claim 11, **characterized in that** the wall thickness in the mid-section of the Coriolis measuring tube (1) is less than 1 mm and is preferably about 0,7 mm.

13. Mass flowmeter according to any one of claims 1 to 12, **characterized in that** an internal cylinder (8) is attached to the end sections of the Coriolis measuring tube (1).

14. Mass flowmeter according to claim 13, **characterized in that** the internal cylinder (8) houses an oscillator or oscillators associated with and exciting the Coriolis measuring tube (1) and/or a detector or detectors associated with the Coriolis measuring tube (1) and capturing Coriolis forces and/or oscillations derived from Coriolis forces.

15. Mass flowmeter according to any one of claims 1 to 14, **characterized in that** the Coriolis measuring tube (1) can be installed in the pipe system (4) in such fashion that the Coriolis tube (1) is decoupled from bending forces emanating from the pipe system (4) and bearing on the Coriolis measuring tube (1).

16. Mass flowmeter according to claim 15, **characterized in that** the end sections of the Coriolis measuring tube (1) are each provided with an elastically deformable buffer ring mounted between the Coriolis measuring tube (1) and the outer enclosure (2) which is elastically deformable in a direction essentially perpendicular to the longitudinal axis of the Coriolis measuring tube (1).

## Revendications

1. Appareil de mesure de débit massique qui fonctionne selon le principe de Coriolis et qui présente
un tube rectiligne (1) de mesure Coriolis qui conduit un fluide en écoulement,
au moins un excitateur d'oscillations associé au tube (1) de mesure Coriolis et qui excite le tube (1) de mesure Coriolis,
au moins un enregistreur de valeurs de mesure associé au tube de mesure Coriolis et qui saisit les forces de Coriolis et/ou des oscillations basées sur les forces de Coriolis,
un boîtier extérieur (2) présentant une bride (3) étant prévu et l'appareil de mesure de débit massique pouvant être monté à l'aide de la bride (3) dans un système de tubes (4) de telle sorte que le tube (1) de mesure Coriolis soit découplé des forces du système de tubes (4) qui proviennent du système de tubes (4) et qui agissent dans le sens de la longueur du tube (1) de mesure Coriolis,
**caractérisé en ce que**
le tube (1) de mesure Coriolis est constitué de céramique,
**en ce qu'**un joint d'étanchéité (7) est prévu entre les surfaces frontales d'extrémité du tube (1) de mesure Coriolis et les brides respectives (6) du système de tubes (4) associé à ces surfaces frontales et
**en ce que** le joint d'étanchéité (7) assure l'étanchéité du tube (1) de mesure Coriolis d'une part vis-à-vis du boîtier extérieur (2) et d'autre part vis-à-vis du système de tubes (4) et agit comme tampon pour les forces exercées dans le sens de la longueur du tube (1) de mesure Coriolis.

2. Appareil de mesure de débit massique selon la revendication 1, **caractérisé en ce que** le tube (1) de mesure Coriolis est constitué de céramique et en particulier **en ce que** le tube (1) de mesure Coriolis est constitué d'oxyde de zirconium, d'une céramique à nitrures ou d'oxyde d'aluminium, en particulier d'oxyde d'aluminium stabilisé par zirconium et contenant plus de 5 % de zirconium.

3. Appareil de mesure de débit massique selon les revendications 1 ou 2, **caractérisé en ce que** le tube (1) de mesure Coriolis est relié fixement au boîtier extérieur (2) à au moins l'une de ses deux extrémités.

4. Appareil de mesure de débit massique selon la revendication 3, **caractérisé en ce que** le tube (1) de mesure Coriolis présente dans au moins une partie d'extrémité un anneau (5) relié solidairement au tube (1) de mesure Coriolis et est relié au boîtier extérieur (2) par l'intermédiaire de l'anneau (5).

5. Appareil de mesure de débit massique selon la revendication 4, **caractérisé en ce que** l'anneau (5) est serti.

6. Appareil de mesure de débit massique selon l'une des revendications 1 à 5, **caractérisé en ce que** le tube (1) de mesure Coriolis est monté à l'une de ses deux extrémités à coulissement par rapport au boîtier extérieur (2) dans le sens de la longueur du tube (1) de mesure Coriolis.

7. Appareil de mesure de débit massique selon l'une des revendications 1 à 5, **caractérisé en ce que** le tube (1) de mesure Coriolis est monté à ses deux extrémités à coulissement par rapport au boîtier extérieur (2) dans le sens de la longueur du tube (1) de mesure Coriolis.

8. Appareil de mesure de débit massique selon l'une des revendications 1 à 7, **caractérisé en ce que** le joint d'étanchéité (7) est constitué de caoutchouc ou de matière synthétique et de préférence de Viton^{®} ou de Kalrez^{®}.

9. Appareil de mesure de débit massique selon l'une des revendications 1 à 8, **caractérisé en ce que** le joint d'étanchéité (7) présente sur son côté extérieur une saillie annulaire et s'étend par cette saillie jusque sur l'anneau (5) prévu sur le tube (1) de mesure Coriolis entre le tube (1) de mesure Coriolis et le boîtier extérieur (2).

10. Appareil de mesure de débit massique selon l'une des revendications 1 à 9, **caractérisé en ce que** le joint d'étanchéité (7) sert à fixer élastiquement une extrémité du tube (1) de mesure Coriolis apte à coulisser par rapport au boîtier extérieur (2).

11. Appareil de mesure de débit massique selon l'une des revendications 1 à 10, **caractérisé en ce que** l'épaisseur de la paroi du tube (1) de mesure Coriolis est plus grande dans au moins une de ses parties d'extrémité que dans sa partie centrale.

12. Appareil de mesure de débit massique selon la revendication 11, **caractérisé en ce que** le tube (1) de mesure Coriolis présente dans sa partie centrale une épaisseur de paroi inférieure à 1 mm et de préférence d'environ 0,7 mm.

13. Appareil de mesure de débit massique selon l'une des revendications 1 à 12, **caractérisé en ce qu'**un cylindre intérieur (8) est prévu sur les parties d'extrémité du tube (1) de mesure Coriolis.

14. Appareil de mesure de débit massique selon la revendication 13, **caractérisé en ce que** l'oscillateur qui est associé au tube (1) de mesure Coriolis et qui excite le tube (1) de mesure Coriolis et/ou l'enregistreur de valeurs de mesure associé au tube (1) de mesure Coriolis, qui saisit les forces de Coriolis et/ou les oscillations basées sur les forces de Coriolis sont prévus dans le cylindre intérieur (8).

15. Appareil de mesure de débit massique selon l'une des revendications 1 à 14, **caractérisé en ce que** le tube (1) de mesure Coriolis peut être monté dans le système de tubes (4) de telle sorte que le tube (1) de mesure Coriolis soit découplé des forces de flexion du système de tubes (4) qui proviennent du système de tubes (4) et qui agissent sur le tube (1) de mesure Coriolis.

16. Appareil de mesure de débit massique selon la revendication 15, **caractérisé en ce qu'**à chacune des parties d'extrémité du tube (1) de mesure Coriolis, un anneau d'amortissement élastiquement déformable essentiellement dans la direction perpendiculaire à l'axe longitudinal du tube (1) de mesure Coriolis est prévu entre le tube (1) de mesure Coriolis et le boîtier extérieur (2).
